# EUROPEAN PATENT APPLICATION

(11) **EP 4 611 122 A1**
(43) Date of publication of application: **03.09.2025**
(21) Application number: 24864327.2
(22) Date of filing: 07.08.2024
(51) Int. Cl.: H01M 10/613

(54) **LIQUID COOLING DEVICE, COMMUNICATION ASSEMBLY AND BATTERY PACK**

(30) Priority: 12.09.2023 CN 202322480069 U; 12.09.2023 CN 202311176383; 12.09.2023 CN 202322485981 U; 12.09.2023 CN 202322485946 U
(71) Applicant: Eve Energy Co., Ltd., Huizhou, Guangdong 516006 (CN)
(72) Inventor: QIU, Wencong, Huizhou, Guangdong 516006 (CN); CHEN, Zhiwei, Huizhou, Guangdong 516006 (CN); CHEN, Zhaohai, Huizhou, Guangdong 516006 (CN)
(74) Representative: Berggren Oy
(86) International application number: PCT/CN2024/110404
(87) International publication number: WO 2025/055604

(57) **Abstract**

Provided are a liquid cooling device, a communicating assembly, and a battery pack. A projection is on the sidewall of a cooling channel. When the outer side of a liquid cooling plate is squeezed, the projection between the sidewalls of the cooling channel supports the sidewalls, thereby preventing the remaining portion of the cooling channel from being clogged.

## Description

This disclosure claims priority to Chinese Patent Applications No. 202322480069.6, No. 202311176383.3, No. 202322485981.0, and No. 202322485946.9 filed with the China National Intellectual Property Administration (CNIPA) on September 12, 2023, the entirety of which are incorporated by reference herein.

### TECHNICAL FIELD

The present disclosure relates to the field of battery technology, and specifically to a liquid cooling device and a battery pack.

### BACKGROUND

In the related art, a battery pack is provided with cells (i.e., battery cells) and a liquid cooling device, and the cooling device is for cooling the cells.

### SUMMARY

However, liquid cooling devices, constructed from soft materials, are prone to having their flow channels blocked when deformed by external forces.

The present disclosure provides a liquid cooling device for cooling cells in a battery pack.

The liquid cooling device includes one or more liquid cooling plates, each including one or more cooling channels.

A portion of a sidewall of each cooling channel is provided with a projection. When an outer side of the liquid cooling plate is not squeezed, the projection on the sidewall is spaced apart from an opposite sidewall of the cooling channel. When the outer side of the liquid cooling plate is squeezed, the projection abuts against the opposite sidewall such that the cooling channel is divided into at least a first channel and a second channel.

The present disclosure also provides a communicating assembly. The communicating assembly includes a first communicating member and a second communicating member. The first communicating member includes a fitting and a limiting sleeve, the fitting is in an interference fit with the second communicating member, and the limiting sleeve is sleeved on an outer side of the fitting and an outer side of the second communicating member.

The present disclosure also provides a battery pack. The battery pack includes multiple cells and a liquid cooling device, the liquid cooling device for cooling the cells.

The liquid cooling device includes one or more liquid cooling plates, each including one or more cooling channels.

A portion of a sidewall of each cooling channel is provided with a projection. When an outer side of the liquid cooling plate is not squeezed, the projection on the sidewall is spaced apart from an opposite sidewall of the cooling channel. When the outer side of the liquid cooling plate is squeezed, the projection abuts against the opposite sidewall such that the cooling channel is divided into at least a first channel and a second channel.

### BENEFICIAL EFFECT

Regarding the liquid cooling device in the present disclosure, the projections are provided on the sidewalls of the cooling channels. Due to the projection(s) disposed between the sidewall(s) of a cooling channel, when the outer side of the liquid cooling plate is squeezed, the projection supports the sidewalls, thereby preventing the remaining portion of the cooling channel from being clogged, which solves the technical problem in the related art that the liquid cooling plate is prone to blockage of the flow channel inside when deformed by external forces.

Regarding the communicating assembly in the present disclosure, the fitting of the first communicating member is in an interference fit with the second communicating member, and the limiting sleeve of the first communicating member is sleeved on the corresponding outer side of the fitting and the second communicating member, thereby achieving the secondary fixing and sealing of the fitting and the second communicating member, improving the air-tightness reliability of them, and reducing the risk of the leakage of cooling medium when the two adjacent liquid cooling plates communicate with each other.

Regarding the battery pack in the present disclosure, the projections are provided on the sidewalls of the cooling channels of the liquid cooling device. Due to the projection(s) disposed between the sidewall(s) of a cooling channel, when the outer side of the liquid cooling plate is squeezed, the projection supports the sidewalls, thereby preventing the remaining portion of the cooling channel from being clogged, which solves the technical problem in the related art that the liquid cooling plate is prone to blockage of the flow channel when deformed by external forces.

### BRIEF DESCRIPTION OF THE DRAWINGS

FIG. 1 is a schematic diagram of the structure of a liquid cooling device in some embodiments of the present disclosure.
FIG. 2 is a top view of a liquid cooling device in some embodiments of the present disclosure.
FIG. 3 is a side view of a liquid cooling device in some embodiments of the present disclosure.
FIG. 4 is an enlarged view of region B in FIG. 2.
FIG. 5 is a schematic diagram showing a mating structure of one first liquid cooling plate and of one second liquid cooling plate in some embodiments of the present disclosure where no communicating assembly is provided between the first and second liquid cooling plates.
FIG. 6 is a schematic diagram of the structure of a first liquid cooling plate in some embodiments of the present disclosure.
FIG. 7 is a side view of a first liquid cooling plate in FIG. 6.
FIG. 8 is an enlarged view of region C in FIG. 1.
FIG. 9 is an enlarged view of region D in FIG. 3.
FIG. 10 is a schematic diagram of the structure of a fitting in some embodiments of the present disclosure.
FIG. 11 is a schematic diagram of the structure of a limiting sleeve in some embodiments of the present disclosure.
FIG. 12 is a schematic diagram of the structure of a first sub-communicating member in some embodiments of the present disclosure.
FIG. 13 is a schematic diagram of the structure of a second sub-communicating member in some embodiments of the present disclosure.
FIG. 14 is a cross-sectional view of the structure of a liquid cooling plate in some embodiments of the present disclosure.
FIG. 15 is an enlarged view of region A in FIG. 14.
FIG. 16 is a schematic diagram of the structure of a plug in some embodiments of the present disclosure.

Reference signs are as follows.
Liquid cooling device 200; liquid cooling plate 10; mating portion 100; first liquid cooling plate 101; second liquid cooling plate 102; first mating portion 103; second mating portion 104; sidewall 20; first sidewall 105; second sidewall 106; limiting strip 107; mounting chamber 108; communicating port 109; projection 110; first projection 111; second projection 112; cooling channel 120; first channel 121; second channel 122; spacer 130; fitting 201; limiting sleeve 202; first sub-communicating member 203; second sub-communicating member 204; sealing ring 205; communicating assembly 210; first communicating member 211; second communicating member 212; empty chamber 1001; first end 2011; second end 2012; annular recess 2013; notch 2021; first segment 2031; second segment 2032; third segment 2033; battery pack 300; plug 301; collecting channel 302; opening 303; first direction X; second direction Y.

### DETAILED DESCRIPTION

In the description of the present disclosure, unless otherwise explicitly specified and limited, the term "connected to each other", "connected" or "fixed" is to be construed in a broad sense, for example, as fixedly connected, detachably connected or integrated; mechanically connected or electrically connected; directly connected to each other or indirectly connected to each other via an intermediary; or internally coupled or interactional between two components. For those of ordinary skill in the art, the specific meanings of the above terms in the present disclosure can be construed depending on specific situations.

In the present disclosure, unless otherwise explicitly specified and limited, when a first feature is described as "on" or "below" a second feature, the first feature and the second feature may be in direct contact, or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is at a horizontally higher level than the second feature. When the first feature is described as "under", "below" or "underneath" the second feature, the first feature is right under, below or underneath the second feature or the first feature is obliquely under, below or underneath the second feature, or the first feature is at a horizontally lower level than the second feature.

In the description of some embodiments, the terms "on", "below", "right", "left", "front", "behind" and other orientation or position relationships are based on the orientation or position relationships shown in the drawings, for facilitating description and simplifying operation, and these relationships do not indicate or imply that the referred device or element has a specific orientation and is constructed and operated in a specific orientation. Therefore, it is not to be construed as limiting the present disclosure. In addition, the terms "first" and "second" are only used for descriptive purposes and have no special meaning.

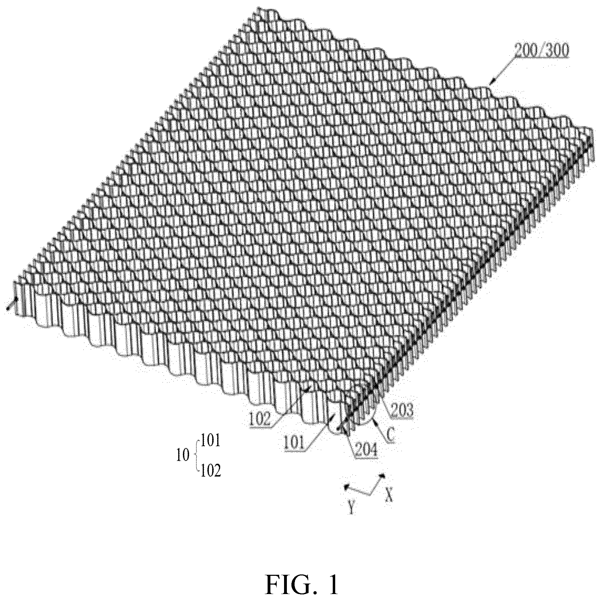

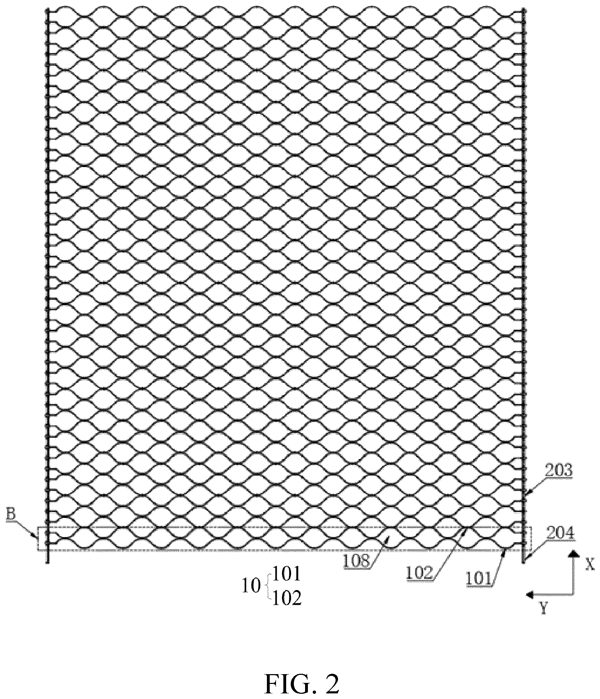

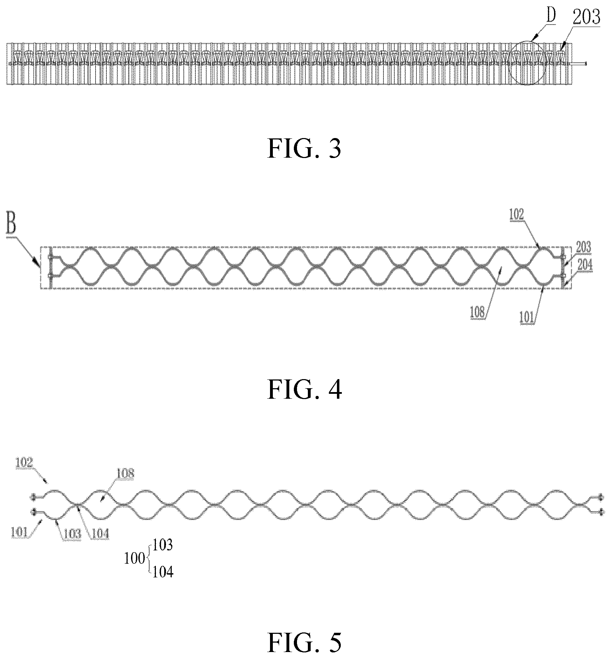

FIG. 1 is a schematic diagram of the structure of a liquid cooling device in some embodiments of the present disclosure. FIG. 2 is a top view of a liquid cooling device in some embodiments of the present disclosure. FIG. 3 is a side view of a liquid cooling device in some embodiments of the present disclosure.

Referring to FIGS. 1, 2, and 3, some embodiments of the present disclosure provide a liquid cooling device. The liquid cooling device 200 is configured to cool multiple cells (not shown in the figures) in a battery pack 300. The liquid cooling device 200 includes multiple liquid cooling plates 10.

In some embodiments, as shown in FIGS. 1 and 2, the liquid cooling plates 10 include multiple first liquid cooling plates 101 and multiple second liquid cooling plates 102 which are arranged in an alternating manner along the first direction X. Each first liquid cooling plate 101 and one second liquid cooling plate 102 adjacent to the first liquid cooling plate 101 define multiple mounting chambers 108 in the second direction Y, and each mounting chamber 108 is sealed from its neighboring mounting chamber 108. Each cell is mounted in a corresponding mounting chamber 108, i.e., the two liquid cooling plates 10 abut against the cell. It is to be understood that in some embodiments, the first liquid cooling plates 101 and the second liquid cooling plates 102 may abut directly against the cells, and in other embodiments, the first liquid cooling plates 101 and the second liquid cooling plates 102 may also abut against the cells through a thermally conductive adhesive, i.e., the thermally conductive adhesive is disposed between the first liquid cooling plates 101, the second liquid cooling plates 102 and the cells.

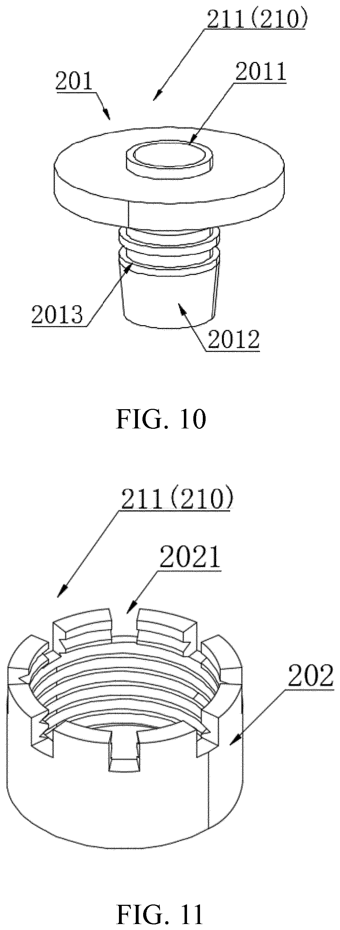

As shown in FIG. 10, each first liquid cooling plate 101 communicates with its adjacent second liquid cooling plate 102 through a communicating assembly 210. The first liquid cooling plates 101, the second liquid cooling plates 102, and the communicating assembly 210 together form a cooling system disposed on the side of the battery pack 300, and the cooling system is equipped with flow channels for the flow of a cooling medium and corresponding input and output ports. It is to be understood that the cooling system can communicate with an external communication device through the input and output ports, thereby constituting a complete cooling circulation system. It is to be noted that the first direction X and the second direction Y intersect.

It can be understood that each cell is located in a corresponding mounting chamber 108, and two neighboring mounting chambers 108 are insulated from each other. In this way, when the cell in one mounting chamber 108 undergoes thermal runaway, it will be confined to the corresponding mounting chamber 108, and thermal spreading will not occur; thus, the neighboring cells will not be affected. It can be understood that the aforementioned configuration enhances the related art by preventing thermal runaway in one cell from affecting its neighboring cells.

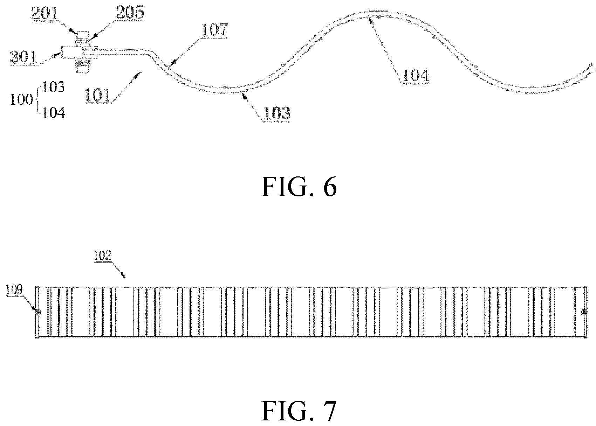

FIG. 4 is an enlarged view of region B in FIG. 2. FIG. 5 is a schematic diagram showing a mating structure of one first liquid cooling plate and of one second liquid cooling plate in some embodiments of the present disclosure where no communicating assembly is provided between the first and second liquid cooling plates. FIG. 6 is a schematic diagram of the structure of a first liquid cooling plate in some embodiments of the present disclosure. FIG. 7 is a side view of a first liquid cooling plate in FIG. 6.

Referring to FIGS. 4 to 7, the first liquid cooling plate 101 and the second liquid cooling plate 102 are each formed with multiple alternatingly arranged mating portions 100 in the second direction Y, each mating portion 100 being curved.

The mating portions 100 of the first liquid cooling plate 101 and the mating portions 100 of the second liquid cooling plate 102, whose positions correspond to the positions of the mating portions 100 of the first liquid cooling plate 101, form the mounting chambers 108. Specifically, the mating portions 100 include multiple first mating portions 103 and multiple second mating portions 104 (as shown in FIG. 5).

In each liquid cooling plate, multiple first mating portions 103 and multiple second mating portions 104 are alternately arranged in the second direction Y. When one first liquid cooling plate 101 is adjacent to one second liquid cooling plate 102, the first mating portions 103 of the first liquid cooling plate 101 and the second mating portions 104 of the second liquid cooling plate 102 define the mounting chambers 108.

It will be appreciated that the combination of one first liquid cooling plate 101 and one second liquid cooling plate 102 is the smallest circulation unit (as shown in FIG. 4) in the liquid cooling device 200 of the present disclosure, and the liquid cooling device 200 consists of multiple circulation units.

In some embodiments, each first mating portion 103 and its adjacent second mating portion 104 in each liquid cooling plate 10 have openings with the same opening direction (not shown in the figures). The opening direction of the first mating portions 103 and second mating portions 104 of the first liquid cooling plate 101 is opposite the opening direction of the first mating portions 103 and second mating portions 104 of the second liquid cooling plate 102. It will be appreciated that the first mating portions 103 of the first liquid cooling plate 101 and the second mating portions 104 of the second liquid cooling plate 102 cooperate to form mounting chambers 108, and the second mating portions 104 of the first liquid cooling plate 101 and the first mating portions 103 of the second liquid cooling plate 102 cooperate to form mounting chambers 108. With the above setup, the mounting chambers 108 in each circulation unit are formed in a row, and two neighboring rows of mounting chambers 108 are aligned along the first direction X, thereby enabling the liquid cooling device 200 of the present disclosure to well arrange the rectangular cells.

The arrangement in the above embodiments does not make good use of space when the cell is cylindrical or the like. Therefore, in some embodiments, in each liquid cooling plate 10, each first mating portion 103 and its adjacent second mating portion 104 have openings which open in opposite directions. In any circulation unit, the first mating portions 103 of the first liquid cooling plate 101 and the second mating portions 104 of the second liquid cooling plate 102 cooperate to form mounting chambers 108, and the second mating portions of the first liquid cooling plate 101 and the first mating portions 103 of the second liquid cooling plate 102 cooperate to form mounting chambers 108. In two adjacent circulation units, mounting chambers 108 may also be formed between the first liquid cooling plate 101 of the former circulation unit and the second liquid cooling plate 102 of the latter circulation unit. With the above-described setup, the mounting chambers 108 in each circulation unit are in a row, and two neighboring rows of mounting chambers 108 are arranged in a staggered manner along the first direction X. It will be appreciated that the staggered setting can increase the number of cells, whose shapes are cylindrical or the like, that the liquid cooling device 200 is able to accommodate.

In each mounting chamber 108, the first end of each first mating portion 103 is fixedly connected to the first end of a corresponding second mating portion 104 by an adhesive, and the second end of the first mating portion 103 is fixedly connected to the second end of the corresponding second mating portion 104 by an adhesive. It is to be understood that the first end and the second end described above are only for better description, and each liquid cooling plate 10 is actually a whole. Regarding two neighboring first mating portions 103, the second end of the former first mating portion 103 and the first end of the latter first mating portion 103 are integral parts of a corresponding second mating portion 104. The first liquid cooling plate 101 is in contact with and fixed to the second liquid cooling plate 102 through an adhesive, so that any two adjacent mounting chambers 108 are sealed from each other, thereby preventing heat spreading in case of thermal runaway of the cells.

In some embodiments, the shape of each mounting chamber 108 matches the shape of a corresponding cell. For example, the housing of the cell is cylindrical, and the first mating portion 103 and the second mating portion 104 defining the mounting chamber 108 are provided in a curved shape that matches the housing of the cell. To improve the stability of the cell, the first mating portion 103 and the second mating portion 104 wrap the outer side of the cell.

In some embodiments, in each mounting chamber 108, limiting strips 107 are provided on a sidewall of the liquid cooling plate 10 facing the cell. The limiting strips 107 may be bonded to the liquid cooling plate 10. It is to be understood that the limiting strips 107 can improve the rigidity of the liquid cooling device 200 and ensure that there is a space for accommodating the structural adhesive between the cells and the liquid cooling plates 10, and, at the same time, it can play a limiting role for the cells.

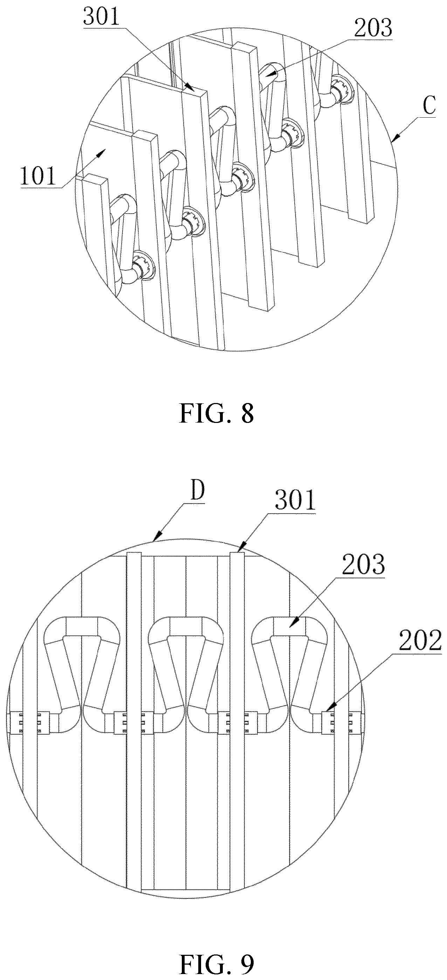

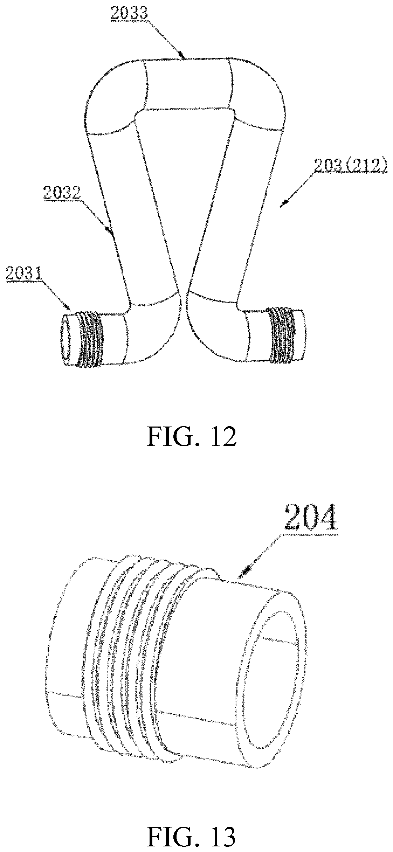

FIG. 8 is an enlarged view of region C in FIG. 1, and FIG. 9 is an enlarged view of region D in FIG. 3. FIGS. 8 and 9 illustrate that any two adjacent liquid cooling plates are connected to each other through a communicating assembly 210 in the present disclosure. FIG. 10 is a schematic diagram of the structure of a fitting in some embodiments of the present disclosure. FIG. 11 is a schematic diagram of the structure of a limiting sleeve in some embodiments of the present disclosure. FIG. 12 is a schematic diagram of the structure of a first sub-communicating member in some embodiments of the present disclosure. FIG. 13 is a schematic diagram of the structure of a second sub-communicating member in some embodiments of the present disclosure.

Referring to FIGS. 10 to 13, a cooling channel is provided within each liquid cooling plate 10, and the liquid cooling plate 10 is provided with a communicating port 109 communicating with the cooling channel. The communicating assembly 210 is configured to communicate with two adjacent liquid cooling plates 10. The communicating assembly 210 includes two first communicating members 211 and one second communicating member 212. Each first communicating member 211 includes a fitting 201 and a limiting sleeve 202. The two first communicating members 211 are located between two adjacent liquid cooling plates 10. The first end 2011 of the fitting 201 of each first communicating member 211 communicates with the communicating port 109 of a corresponding liquid cooling plate 10, and the second end 2012 of the fitting 201 of the first communicating member 211 communicates with the second communicating member 212 and the two are engaged with each other using an interference fit. The limiting sleeve 202 is provided on the outer side of the corresponding fitting 201 and second communicating member 212.

It can be understood that the fitting 201 is in an interference fit with the second communicating member 212, and the limiting sleeve 202 is sleeved on the outer side of the fitting 201 and the second communicating member 212, thereby achieving the secondary fixing and sealing of the fitting 201 and the second communicating member 212, which improves the air-tightness reliability of them, and preventing the technical problem of the leakage of cooling medium that is prone to occur when two adjacent liquid cooling plates 10 communicate with each other.

In some embodiments, to improve the sealing between the second communicating member 212 and the fittings 201, each first communicating member 211 further includes a sealing ring 205. The sealing ring 205 is disposed between the second end 2012 of the fitting 201 and the second communicating member 212, and the second communicating member 212 is in an interference fit with the fitting 201 through the sealing ring 205. It is to be understood that the sealing ring 205 is provided to such that the second communicating member 212 and the fitting 201 are in an interference fit, and it is possible to ensure good sealing when fixing the second communicating member 212 and the fitting 201.

To prevent the sealing ring 205 from falling off as well as to limit the position of the sealing ring 205, an annular recess 2013 is provided on the sidewall of the second communicating member 212 and/or the sidewall of the fitting 201, and a portion of the sealing ring 205 is located in the annular recess 2013. It is to be understood that the sealing ring 205 protrudes above the annular recess 2013 to enable an interference fit between the second communicating member 212 and the fitting 201 as well as to ensure a good sealing performance. At the same time, the annular recess 2013 also facilitates the connection between the second communicating member 212 and the fitting 201, improving ease of assembly.

The number of annular recesses 2013 may be greater than or equal to the number of sealing rings 205. It can be understood that when the number of annular recesses 2013 is greater than the number of sealing rings 205, the extra annular recesses 2013 may be used as a spare. When a sealing ring 205 falls off from the corresponding annular recess 2013, the sealing ring 205 can be continued to be mounted in one of the spare annular recesses 2013, so that the second communicating member 212 and the fitting 201 have good sealing performance, while the difficulty of assembling the two is reduced.

In some embodiments, the fitting 201 is sleeved on the outer side of the second communicating member 212, the outer side of the fitting 201 is provided with an external thread, the limiting sleeve 202 is provided with an internal thread, and the limiting sleeve 202 is threadedly connected to the fitting 201. It can be understood that when the second communicating member 212 and the fitting 201 are connected, the second communicating member 212 is in an interference fit with the fitting 201, and therefore, the outer diameter of the fitting 201 will increase. If the limiting sleeve 202 has been sleeved on the outer side of the fitting 201 in the process of matching, the limiting sleeve 202 plays the role of a limiting, and at this time the installation of the second communicating member 212 and the fitting 201 will be difficult. Therefore, during the installation of the second communicating member 212 and the fitting 201, the limiting sleeve 202 may first be sleeved on a portion of the second communicating member 212 or of the fitting 201 that is not in an interference fit, and then the limiting sleeve 202 may be sleeved on the outer side of the fitting 201 after the interference fit of the second communicating member 212 and the fitting 201 is completed. Also, since the second communicating member 212 and the fitting 201 are already in the state of interference fit, the outer diameter of the fitting 201 increases, and it is difficult to move the limiting sleeve 202 to the fitting position; therefore, the threads are provided on the fitting 201 and the limiting sleeve 202, and the limiting sleeve 202 can be screwed to the fitting position through the threads, which plays a role of limiting.

In some embodiments, multiple notches 2021 are provided at an end of the limiting sleeve 202 so that it is easier for the limiting sleeve 202 to reach the fitting position.

In some embodiments, to facilitate the connection between the second communicating member 212 and the fitting 201, the outer diameter of the second end 2012 of the fitting 201 is set to be smaller than the inner diameter of the second communicating member 212, and the outer diameter of the second end 2012 of the fitting 201 gradually increases in a direction away from the second communicating member 212.

It will be appreciated that in other embodiments, the second communicating member 212 may also be sleeved on the outer side of the fitting 201. The outer side of the second communicating member 212 may also be provided with external threads, and the outer diameter of the second communicating member 212 may gradually increase in a direction away from the fitting 201.

In some embodiments, referring to FIGS. 12 and 13, the second communicating member 212 includes a first sub-communicating member 203 and a second sub-communicating member 204. The first sub-communicating member 203 is configured to be connected between two adjacent liquid cooling plates 10, and the second sub-communicating member 204 is configured to be connected to the outermost liquid cooling plate 10 to act as an input/output end of the liquid cooling device 200.

The first sub-communicating member 203 includes two first segments 2031, two second segments 2032, and a third segment 2033. The two first segments 2031 are disposed opposite each other, each second segment 2032 is bent and is connected to a corresponding first segment 2031, and the two second segments 2032 are connected through the third segment 2033. The distance between ends of the two second segments 2032 closer to the first segments 2031 is less than the distance between ends of the two second segments 2032 closer to the third segment 2033.

It will be appreciated that the above setup allows the first sub-communicating member 203 to have a sufficient deformation margin such that when the distance between two adjacent liquid cooling plates 10 is increased or decreased, the length of the first sub-communicating member 203 in the corresponding direction may be increased or decreased correspondingly.

In some embodiments, the first end 2011 of the fitting 201 is welded to the communicating port 109. It is to be understood that the first end 2011 of the fitting 201 and the communicating port 109 are sealed.

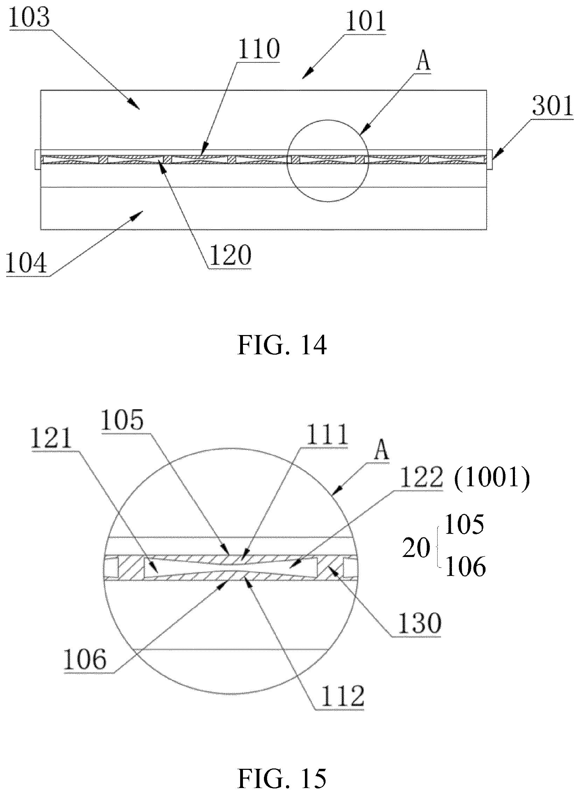

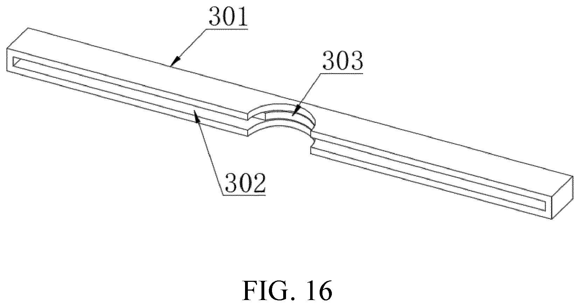

FIG. 14 is a cross-sectional view of the structure of a liquid cooling plate in some embodiments of the present disclosure. FIG. 15 is an enlarged view of region A in FIG. 14. FIG. 16 is a schematic diagram of the structure of a plug in some embodiments of the present disclosure.

Referring to FIGS. 14 to 16, in some embodiments, each liquid cooling plate 10 includes an empty chamber 1001, the empty chamber 1001 is provided with multiple spacers 130, and the spacers 130 and the walls of the empty chamber 1001 enclose multiple cooling channels 120. For example, each spacer 130 has two ends connected to the opposite walls of the empty chamber 1001 respectively to separate the empty chamber 1001 into multiple cooling channels 120. As can be understood, the spacers 130 separate the empty chamber 1001 into the cooling channels 120, so that when the liquid cooling plate 10 is squeezed, the spacers 130 corresponding to the cooling channels 120 can act as a support structure to ensure the smooth flow in the cooling channels 120.

The sidewalls 20 of the cooling channels 120 are provided with projections 110 such that when the outer side of the liquid cooling plate 10 is squeezed, the projection 110 abuts against the opposing sidewall 20 to divide the corresponding cooling channel 120 into at least a first channel 121 and a second channel 122. It will be appreciated that the projection 110 divides the corresponding cooling channel 120 into at least two smaller channels. In some embodiments, depending on the shape and location of the projections 110, the projections 110 may divide the cooling channel 120 into three or more channels. In some embodiments, the shape of the channels may vary depending on the shape and location of the projections 110.

The projections 110 include a first projection 111. The sidewalls 20 of each cooling channel 120 include a first sidewall 105 and a second sidewall 106 disposed opposite each other, and the first sidewall 105 is provided with the first projection 111. When the outer side of the liquid cooling plate 10 is not squeezed, the first projection 111 is spaced apart from the opposing sidewall; and when the outer side of the liquid cooling plate 10 is squeezed, the first projection 111 divides the cooling channel 120 into at least the first channel 121 and the second channel 122.

It will be appreciated that due to the projection 110 provided between the first sidewall 105 and the second sidewall 106 of the cooling channel 120, when the outer side of the liquid cooling plate 10 is squeezed, the projection 110 supports the first sidewall 105 and the second sidewall 106, thereby preventing the remaining portion of the cooling channel 120 from being clogged.

In some embodiments, the projections 110, the spacers 130, and the liquid cooling plates 10 may be integrally molded. To reduce the molding difficulty, the projections 110 further include a second projection 112, and the second projection 112 is provided on the second sidewall 106. The position of the second projection 112 corresponds to the position of the first projection 111. When the outer side of the liquid cooling plate 10 has not been squeezed, the first projection 111 is spaced apart from the second projection 112; and when the outer side of the liquid cooling plate 10 has been squeezed, the first projection 111 abuts against the second projections 112 to divide the cooling channel 120 into at least the first channel 121 and the second channel 122.

In some embodiments, the second sidewall 106 is provided with the second projection 112, and the first projection 111 is staggered with the second projection 112. The first projection 111 is opposite and spaced apart from the portion of the second sidewall 106 not provided with the second projection 112, and the second projection 112 is opposite and spaced apart from the portion of the first sidewall 105 not provided with the first projection 111, such that when the outer side of the liquid cooling plate 10 is squeezed, the first projection 111 abuts against the portion of the second sidewall 106 not provided with the second projection 112, and the second projection 112 abuts against the portion of the first sidewall 105 not provided with the first projection 111.

In some embodiments, the thickness of the portion of the projection 110 corresponding to the middle portion of the sidewall 20 is greater than the thickness of the portion of the projection 110 corresponding to the side portion of the sidewall 20. For example, the projection 110 is curved or rectangular, and it is understood that the curved or rectangular shape refers to the cross-sectional shape of the projection 110 (shown in FIG. 14). The projection 110 and the spacer 130 have the same extended shape as that of the liquid cooling plate 10.

In some embodiments, the distance between the first projection 111 and the second projection 112 in the cooling channels 120 that are at the lower location and in their natural state (i.e., not squeezed) is less than the distance between the first projection 111 and the second projection 112 in the cooling channels 120 at the higher location in their natural state. Alternatively, the distance between the first projection 111 and the second projection 112 in the cooling channels 120 that are at the lower location and in their natural state (i.e., not squeezed) is greater than the distance between the first projection 111 and the second projection 112 in the cooling channels 120 at the higher location in their natural state. It will be appreciated that the above-described setting may accelerate the flow rate of the cooling medium in the corresponding cooling channels 120, as well as utilize the cooling medium to provide support for the corresponding cooling channels 120 against external extrusion, as needed.

In some embodiments, referring to FIGS. 8 and 9, in each liquid cooling plate 10, multiple cooling channels 120 communicate with the corresponding communicating port 109 to converge at the communicating port 109. Each liquid cooling plate 10 has two ends fitted with plugs 301, and the sidewalls of the liquid cooling plate 10 facing the plugs 301 have openings. A collecting channel 302 is provided within each plug 301 such that the flow of the cooling channels 120 in the liquid cooling plate 10 can be collected at the plug 301. The plug 301 has an opening 303, and the shape of the opening 303 matches the shape of the fitting 201, ensuring that the fitting 201 does not obstruct the installation of the plug 301.

Some embodiments of the present disclosure provide a battery pack 300, which includes the liquid cooling device 200.

The battery pack 300 includes multiple cells and the liquid cooling device 200. The liquid cooling device 200 is configured to cool the cells in the battery pack 300. The liquid cooling device 200 includes multiple liquid cooling plates 10 and multiple communicating assemblies 210.

The liquid cooling plates 10 include multiple first liquid cooling plates 101 and multiple second liquid cooling plates 102. The first liquid cooling plates 101 and the second liquid cooling plates 102 are arranged in an alternating manner along the first direction X. Each first liquid cooling plate 101 and its adjacent second liquid cooling plate 102 enclose multiple mounting chambers 108 in the second direction Y, and each mounting chamber 108 is sealed from its neighboring mounting chamber 108. Each cell is mounted in a corresponding mounting chamber 108. Each first liquid cooling plate 101 communicates with its neighboring second liquid cooling plate 102 through a corresponding communicating assembly 210. The first liquid cooling plates 101, the second liquid cooling plates 102, and multiple communicating assemblies 210 together form the cooling system disposed on the side of the battery pack 300, and the cooling system is equipped with flow channels for the flow of the cooling medium and the corresponding input and output ports. It is to be understood that the cooling system can communicate with the external communication device through the input and output ports, thereby constituting a complete cooling circulation system. It is to be noted that the first direction X and the second direction Y intersect.

It can be understood that each cell is located in a corresponding mounting chamber 108, and two neighboring mounting chambers 108 are insulated from each other. In this way, when the cell in any mounting chamber 108 undergoes thermal runaway, it will be confined to the corresponding mounting chamber 108, and thermal spreading will not occur; thus, the neighboring cells will not be affected. It can be understood that the aforementioned configuration enhances the related technology by preventing thermal runaway in one cell from affecting neighboring cells.

## Claims

1. A liquid cooling device (200), for cooling cells in a battery pack (300), **characterized by** comprising:
one or more liquid cooling plates (10), each comprising one or more cooling channels (120);
wherein a portion of a sidewall (20) of each cooling channel (120) is provided with a projection (110); wherein when an outer side of the liquid cooling plate (10) is not squeezed, the projection (110) on the sidewall (20) is spaced apart from an opposite sidewall (20) of the cooling channel (120), and when the outer side of the liquid cooling plate (10) is squeezed, the projection (110) abuts against the opposite sidewall (20) such that the cooling channel (120) is divided into at least a first channel (121) and a second channel (122).

2. The liquid cooling device (200) according to claim 1, wherein each liquid cooling plate (10) has an empty chamber (1001) and a plurality of spacers (130) provided within the empty chamber (1001), and each spacer (130) has two ends connected to two opposite walls of the empty chamber (1001) respectively such that the empty chamber (1001) is divided into the cooling channels (120).

3. The liquid cooling device (200) according to claim 1, wherein the projection (110) comprises a first projection (111); the cooling channel (120) comprises a first sidewall (105) and a second sidewall (106) opposite each other, the first sidewall (105) is provided with the first projection (111), and the first projection (111) is opposite and spaced apart from the second sidewall (106);
wherein when the outer side of the liquid cooling plate (10) is squeezed, the first projection (111) divides the cooling channel (120) into at least the first channel (121) and the second channel (122).

4. The liquid cooling device (200) according to claim 3, wherein the projection (110) further comprises a second projection (112); the second sidewall (106) is provided with the second projection (112), and the first projection (111) is opposite and spaced apart from the second projection (112);
wherein when the outer side of the liquid cooling plate (10) is squeezed, the first projection (111) abuts against the second projection (112) such that the cooling channel (120) is divided into at least the first channel (121) and the second channel (122).

5. The liquid cooling device (200) according to claim 3, wherein the projection (110) further comprises a second projection (112); the second sidewall (106) is provided with the second projection (112), and the first projection (111) is staggered with the second projection (112);
wherein the first projection (111) is opposite and spaced apart from a portion of the second sidewall (106) not provided with the second projection (112), and the second projection (112) is opposite and spaced apart from a portion of the first sidewall (105) not provided with the first projection (111);
wherein when the outer side of the liquid cooling plate (10) is squeezed, the first projection (111) abuts against the portion of the second sidewall (106) not provided with the second projection (112), and the second projection (112) abuts against the portion of the first sidewall (105) not provided with the first projection (111).

6. The liquid cooling device (200) according to any one of claims 1 to 5, wherein a thickness of a portion of the projection (110) corresponding to a middle portion of the sidewall (20) is greater than a thickness of a portion of the projection (110) corresponding to a side portion of the sidewall (20).

7. The liquid cooling device (200) according to claim 6, wherein the projection (110) is of a curved or rectangular shape.

8. The liquid cooling device (200) according to any one of claims 1 to 5, wherein the liquid cooling plate (10) and the projection (110) thereof are formed as a unitary structure.

9. The liquid cooling device (200) according to any one of claims 1 to 5, wherein two adjacent ones of the liquid cooling plates (10) are connected such that a plurality of separate mounting chambers (108) are formed, and the cells are mounted in the mounting chambers (108); a shape of each mounting chamber (108) matches a shape of a correspond cell of the cells, and any two neighboring ones of the plurality of mounting chambers (108) are sealed from each other.

10. The liquid cooling device (200) according to claim 9, wherein in each mounting chamber (108), a plurality of limiting strips (107) are provided on a sidewall of each liquid cooling plate (10) facing each cell.

11. The liquid cooling device (200) according to claim 10, wherein a thermally conductive structural adhesive is disposed between neighboring ones of the limiting strips (107).

12. The liquid cooling device (200) according to any one of claims 1 to 5, wherein the liquid cooling plate (10) is provided with a communicating port (109), and the communicating port (109) is configured to communicate with the one or more cooling channels (120); in each liquid cooling plate (10), the cooling channels (120) communicate with the corresponding communicating port (109) to have their flows collected through the communicating port (109).

13. The liquid cooling device (200) according to claim 12, wherein the liquid cooling device (200) further comprises a plug (301), and the plug (301) are fitted to an end of the liquid cooling plate (10);
the liquid cooling plate (10) has a sidewall facing the plug (301), the sidewall having an opening (303), and the plug (301) communicates, through the opening (303), with the cooling channels (120) of the liquid cooling plate (10); and
a collecting channel (302) is provided within the plug (301) such that the cooling channels (120) have their flows collected through the collecting channel (302).

14. The liquid cooling device (200) according to any one of claims 1 to 13, wherein the liquid cooling device (200) further comprising:
the liquid cooling plates (10), abutting against the cells and being each provided with a communicating port (109) communicating with the one or more cooling channels (120);
wherein the liquid cooling device (200) further comprises:
a communicating assembly (210) comprising a first communicating member (211) and a second communicating member (212); the first communicating member (211) comprises a fitting (201) and a limiting sleeve (202), a first end (2011) of the fitting (201) communicates with the communicating port (109) of a corresponding one of the liquid cooling plates (10), a second end (2012) of the fitting (201) is in an interference fit with the second communicating member (212), and the limiting sleeve (202) is sleeved on an outer side of the fitting (201) and an outer side of the second communicating member (212).

15. The liquid cooling device (200) according to claim 14, wherein the communicating assembly (210) is configured to communicate with two adj acent ones of the liquid cooling plates (10);
the communicating assembly (210) comprises two first communicating members (211), and the two first communicating members (211) are located between the two adjacent liquid cooling plates (10); and
the first end (2011) of the fitting (201) of each first communicating member (211) communicates with the communicating port (109) of a corresponding one of the two liquid cooling plates (10).

16. The liquid cooling device (200) according to claim 14, wherein the first communicating member (211) further comprises a sealing ring (205), the sealing ring (205) is disposed between the second end (2012) of the fitting (201) and the second communicating member (212), and the second communicating member (212) is in an interference fit with the fitting (201) through the sealing ring (205).

17. The liquid cooling device (200) according to claim 16, wherein an annular recess (2013) is provided on a sidewall of the second communicating member (212) and/or a sidewall of the fitting (201), and at least a portion of the sealing ring (205) is within the annular recess (2013).

18. The liquid cooling device (200) according to any one of claims 14 to 17, wherein a sidewall of the fitting (201) or a sidewall of the second communicating member (212) is provided with an external thread, the limiting sleeve (202) is provided with an internal thread, and the limiting sleeve (202) is threadedly connected to the fitting (201) or the second communicating member (212).

19. The liquid cooling device (200) according to any one of claims 14 to 17, wherein when the second end (2012) of the fitting (201) is inserted into the second communicating member (212), an outer diameter of the second end (2012) of the fitting (201) gradually increases in a direction toward the communicating port (109); or when the second communicating member (212) is inserted into the second end (2012) of the fitting (201), an outer diameter of the second communicating member (212) gradually increases in a direction away from the communicating port (109).

20. The liquid cooling device (200) according to any one of claims 14 to 17, wherein the second communicating member (212) comprises two first segments (2031) opposite each other, two second segments (2032) bent and connected to the two first segments (2031) respectively, and a third segment (2033) connecting to the two second segments (2032); a distance between ends of the two second segments (2032) closer to the two first segments (2031) is less than a distance between ends of the two second segments (2032) closer to the third segment (2033).

21. The liquid cooling device (200) according to any one of claims 14 to 17, wherein the first end of the fitting (201) is welded to the communicating port (109), and the first end of the fitting (201) and the communicating port (109) are sealed.

22. The liquid cooling device (200) according to any one of claims 14 to 17, wherein a notch (2021) is provided on an end of the limiting sleeve (202) closer to the communicating port (109).

23. The liquid cooling device (200) according to any one of claims 1 to 22, wherein the liquid cooling device (200) comprises the liquid cooling plates (10); the liquid cooling plates (10) comprise a plurality of first liquid cooling plates (101) and a plurality of second liquid cooling plates (102), and the first liquid cooling plates (101) and the second liquid cooling plates (102) are arranged in an alternating manner along a first direction (X); each first liquid cooling plate (101) and an adjacent one of the second liquid cooling plates (102) define a plurality of separate mounting chambers (108) in a second direction (Y) intersecting the first direction (X); and
wherein each mounting chamber (108) is configured to mount a corresponding cell of the cells, and two neighboring ones of the mounting chambers (108) are sealed from each other.

24. The liquid cooling device (200) according to claim 23, wherein the first liquid cooling plate (101) and the adjacent second liquid cooling plate (102) each comprise a plurality of alternately-arranged mating portions (100) in the second direction (Y);
wherein each mating portion (100) is curved, and the mating portions (100) of the first liquid cooling plate (101) and the mating portions (100) of the second liquid cooling plate (102), whose positions correspond to positions of the mating portions (100) of the first liquid cooling plate (101), together form the mounting chambers (108).

25. The liquid cooling device (200) according to claim 24, wherein both the mating portions (100) of the first liquid cooling plate and the mating portions (100) of the second liquid cooling plate comprise a plurality of first mating portions (103) and a plurality of second mating portions (104), arranged alternately along the second direction (Y); and
wherein the first mating portions (103) of the first liquid cooling plate (101) and the second mating portions (104) of the second liquid cooling plate (102) define the mounting chambers (108).

26. The liquid cooling device (200) according to claim 25, wherein each first mating portion (103) and its adjacent second mating portion (104) in the same liquid cooling plate (10) have openings which open in opposite directions.

27. The liquid cooling device (200) according to claim 25, wherein each first mating portion (103) and its adjacent second mating portion (104) in the same liquid cooling plate (10) have openings which open in a same direction; and
the opening direction of each first mating portion (103) of the first liquid cooling plate (101) is opposite the opening direction of each first mating portion (103) of the second liquid cooling plate (102), and the opening direction of each second mating portion (104) of the first liquid cooling plate (101) is opposite the opening direction of each second mating portion (104) of the second liquid cooling plate (102).

28. The liquid cooling device (200) according to claim 27, wherein the mounting chambers (108) between each first liquid cooling plate (101) and its adjacent second liquid cooling plate (102) are arranged in a row in the second direction (Y), and two rows of the mounting chambers (108) which are neighbored in the first direction (X) are staggered along the first direction (X).

29. The liquid cooling device (200) according to claim 25, wherein in each mounting chamber (108), a first end of the first mating portion (103) defining the mounting chamber is fixedly connected to a first end of the second mating portion (104) defining the mounting chamber by an adhesive, and a second end of the first mating portion (103) is fixedly connected to a second end of the second mating portion (104) by an adhesive.

30. The liquid cooling device (200) according to claim 25, wherein a housing of each cell is cylindrical; the first mating portion (103) and the second mating portion (104), defining a corresponding mounting chamber (108) of the mounting chambers (108), are in a curved shape which matches the housing of the cell, and the first mating portion (103) and the second mating portion (104) are configured to wrap an outer side of the cell.

31. The liquid cooling device (200) according to any one of claims 24 to 30, wherein the one or more cooling channels (120) are provided within the first liquid cooling plate (101) and the second liquid cooling plate (102);
the first liquid cooling plate (101) and the second liquid cooling plate (102) each have two ends provided respectively with two communicating ports (109), each communicating port (109) communicating with the cooling channels (120); and
the communicating ports (109) at adjacent ends of the first liquid cooling plate (101) and its adjacent second liquid cooling plate (102) communicate with each other through a communicating assembly (210).

32. A communicating assembly (210), **characterized by** comprising:
a first communicating member (211) and a second communicating member (212);
wherein the first communicating member (211) comprises a fitting (201) and a limiting sleeve (202), the fitting (201) is in an interference fit with the second communicating member (212), and the limiting sleeve (202) is sleeved on an outer side of the fitting (201) and an outer side of the second communicating member (212).

33. A battery pack (300), **characterized by** comprising:
a plurality of cells; and
the liquid cooling device (200) according to any one of claims 1 to 31.
